# EUROPEAN PATENT SPECIFICATION

(11) **EP 4 588 663 B1**
(45) Date of publication and mention of the grant of the patent: **22.04.2026**
(21) Application number: 24153199.5
(22) Date of filing: 22.01.2024
(51) Int. Cl.: B33Y 99/00, B65D 51/00, B65D 51/16

(54) **VIAL CAP**
VERSCHLUSSKAPPE FÜR EINE AMPULLE
BOUCHON DE FLACON

(43) Date of publication of application: 23.07.2025
(73) Proprietor: Roncadelle Operations Srl, 25030 Castel Mella (BS) (IT)
(72) Inventor: Ryckalts, Erik, 25030 Castel Mella (Bs) (IT); Saputo, Michele, 25030 Castel Mella (Bs) (IT)
(74) Representative: Brantsandpatents bv

(56) References cited:
- EP-B1- 0 909 719
- EP-B1- 3 326 932
- CA-A1- 2 856 894
- FR-B1- 2 893 922

## Description

### FIELD OF THE INVENTION

The present invention relates to a device for covering the open end of vials. More in particular, the present inventions relates to caps for vials.

### BACKGROUND

US5088612 describes a vial cap of plastic having a skirt portion press fit onto the neck of a vial. A transversely extending wall having a central opening is integral with the upper end portion of the skirt, and a sealing disc is positioned between the open end of the vial and the transverse wall. A plastic lid having a plastic hinge integrally connected between the lid and the skirt is provided for closing the central opening of the cap during storage. The lid disclosed in US '612 does not include any element which indicates if the lid has ever been opened. Furthermore, the cap of US '612 is attached by means of interference fit provided by two internal annular ribs. Said ribs still permit the removal of the cap, allowing for the adulteration of the contents of the container covered by the lid.

Also known is the device from CA2856894. CA '894 relates to a closure device for a cap on a container with a flange, comprising a cap housing a ring provided with lower internal notches bearing under said flange and external notches cooperating with a groove of the cap for securing said ring to said cap, said cap having a frangible zone breakable, said ring being formed by a ring extended by tenons intended to surround said plug and provided with at least one deformable and breakable bridge provided opposite said tenons and adapted to deform radially elastically to allow the passage of said collar in force in said ring and to be broken to allow the withdrawal of said ring relative to said collar and the withdrawal of said cap of said container. The device of CA '894 requires multiple independent parts in order to lock onto a container with a flange, thereby increasing the cost of said device and increasing the risk of loosening and/or misaligning some of the parts during application. FR 2 893 922 B1 describes a cap according to the preamble of independent claim 1.

The present invention aims to resolve at least some of the problems and disadvantages mentioned above. The aim of the invention is to provide a device which eliminates those disadvantages. The need arises for an cap for a vial which does not leave a user in doubt regarding its integrity and the safety of the vial contents. Said cap being ideally cheap and simple to manufacture and recycle.

### SUMMARY OF THE INVENTION

The present invention and embodiments thereof serve to provide a solution to one or more of above-mentioned disadvantages. To this end, the present invention relates to a self-locking vial cap according to claim 1.

The cap comprises a number of features, the geometry of which features include mutually opposing faces, which limit the manufacturability of such caps. More in particular, said features are not conducive to the use of injection molding as a manufacturing process, thus precluding the use one of this most efficient manufacturing processes. The present invention advantageously overcomes these limitations by providing a cap manufactured out of two halves, each of which are easily manufacturable by means of injection molding while requiring simple mold geometries. As provided by the present invention, the halves of the cap are unified in order to form a cap that is ready to use in combination with a stopper in order to close a vial. In order to ensure said cap meets the most stringent quality and safety requirements, a suitable construction for a union between both halves of the cap was developed.

Preferred embodiments of the device are shown in any of the claims 2 to 10.

In a second aspect, the present invention relates to a vial cap assembly according to claim 11.

Preferred embodiments of the vial cap assembly are shown in any of the claims 12 to 13.

### DESCRIPTION OF FIGURES

The following description of the figures of specific embodiments of the invention is merely exemplary in nature and is not intended to limit the present teachings, their application or uses. Throughout the drawings, corresponding reference numerals indicate like or corresponding parts and features.
**Figure 1** schematically presents both halves of the cap.
**Figure 2** presents a cross cut of the cap in its final form and while assembled onto a vial.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In a first aspect, the invention provides a cap for a vial, the cap comprises:
a first half comprising an open tubular body, a plurality of locking flaps for locking onto a radial collar of a vial, said flaps extending diagonally upwards from an inner wall of the tubular body towards the center axis of the first half; and
a second half defining a top wall and a partial side wall of the cap, said second half having a tubular body.

A self-locking vial cap comprises a number of features, the geometry of which features include mutually opposing faces, which limit the manufacturability of such caps. More in particular, said features are not conducive to the use of injection molding as a manufacturing process, thus precluding the use one of this most efficient manufacturing processes. The present invention advantageously overcomes these limitations by providing a cap manufactured out of two halves, each of which are easily manufacturable by means of injection molding while requiring simple mold geometries. As provided by the present invention, the halves of the cap are unified in order to form a cap that is ready to use in combination with a stopper in order to close a vial. In order to ensure said cap meets the most stringent quality and safety requirements, a suitable construction for a union between both halves of the cap was developed.

According to the invention, at least the outer perimeter of the bottom of the second half comprises a rebated portion forming a step and an adjacent thinned wall portion, the outer perimeter surface of said thinned wall portion being substantially parallel with the axis of the cap, said outer perimeter surface of said thinned wall portion forming a union with at least part of the inner perimeter surface of the first half. In this way, proper alignment of both halves of the cap in advantageously ensured, which results in a cap having superior concentricity, and thus better sealing capabilities. This geometry of the union surfaces is not only particularly conducive to ease of manufacturability, but also the combination of halves of different materials and/or comprising special coatings directed at specific effects. For example, the surfaces at the union between both halves of the cap may comprise an anti-bacterial substance, in this way extending the shelf life and safety of the contents of a vial equipped with such a cap. A further or another possibility includes the use of breakable elements at the union, in particular, on the thinned wall portion of the second half or the cap. Such breakable elements can be configured to break by traction and/or by shearing force, and/or at a predetermined pressure in order to provide access to the contents of a vial or to prevent over pressure to develop inside a vial.

In an embodiment, the step of the second half further comprises an annular protrusion between the thinned wall portion and the outer perimeter of said step, said protrusion having a triangular section. Said protrusion may join a complimentary surface atop the first half in order to increase the surface are of the union between the two halves. More preferably, the surface of the first half contacting said protrusion is substantially flat. In this way, an external and an internal annular recess is advantageously formed to each side of said protrusion, in particular said internal recess may be used to deposit a desirable substance such as an adhesive, anti-bacterial product, gasket or the like, thereby greatly expanding the functional flexibility of the cap.

In an embodiment, characterized in that, the union between both halves further comprises at least one layer of glue. By preference, said glue is a anaerobic adhesive, most preferably said adhesive is designed to be either permanent or to be breakable under one or more conditions. Said conditions may include the application of a predetermined force and/or acceleration, application of a substance and/or an electromagnetic radiation within a predetermined frequency and amplitude range, such as, though not limited to infrared, more preferably ultraviolet light, UV. In this way, the circumstances under which the contents of a vial can be accessed can be carefully tailored to the need of a user. By preference, said adhesive or combination thereof are to give a tactile and/or visual indication of their state. Such states may include one or a combination of a cured state, broken/degraded state, and/or denoting having been exposed to predetermined temperatures and/or substances. By preference, said visual indications of state comprise at least a change in color. An example of such an application may include an adhesive which changes color in the presence of humidity, making it particularly suitable during a process of lyophilization in order to indicate a successful removal of water vapor and the end of said process.

In an embodiment, the union between both halves further comprises at least one fused layer of a plastic material. In this way, a strong and airtight bond is created between both material and consequently both halve of the cap, making such a cap particularly robust, for example, for long term storage.

In an embodiment, the top wall of the second half comprises a frangible line defining at least a partial perimeter around a portion of said top wall, which portion of the top wall is configured as a lid. Such frangible line makes it easier to divide and/or destroy at least part of the cap in a controlled manned in order to give the user access to the contents of a vial protected with such a cap. This permits also making the union between both halves of the cap more robust without sacrificing ease of access to the contents of said vial.

In this context, the term frangible is to be understood as an element or part thereof which is of more delicate construction than the surrounding material and therefore suitable to be broken in a controlled manner and such that little to no damage occurs to said surrounding material.

In an embodiment, said frangible line defines a circle. By preference, said circle is substantially concentric with the perimeter of the cap. More preferably, said circle comprises a raised portion extending above the remaining of the top wall of the cap. In this way, the user can attain sufficient purchase on said raised part, making it easier to break said frangible line and gain access to the contents of a vial equipped with said cap. Most preferably, the whole top surface of said circle raises above the remaining surface of the top wall of the cap, which further eases the intentional breakage of said frangible line by the user.

In an embodiment, the second half further comprises a venting mechanism to allow the release of pressure within the vial. Said venting mechanism is provided by means of orifices on any of the wall s of the cap, more preferably the lateral wall of the cap. In this way, the caps are advantageously usable in a process of lyophilization and/or as a vent in case excessive pressure develops inside the cap. Said vent may also be provided as a valve configured to open a predetermined pressure.

In an embodiment, the thinned side wall portion of at least one of the halves includes at least one radially extending rib. In this way, both halves of the cap may be assembled by means of a mechanical connection, which further simplifies the production of the cap. By preference, the thinned side wall portion of at least one of the halves includes two radially extending ribs vertically spaced relative to each other, in this way providing an even more robust mechanical connection between both halves of the cap. More preferably, said thinned side wall portion of at least one of the halves includes at least one through-hole between the two radially extending ribs. In this way, in a case of overpressure, a bottom-most rib may lose contact with the opposite surface on the other half of the cap, allowing both halves to separate a distance which does not exceed the distance between both ribs. This allows both halves to remain attached by means of the top-most rib while exposing said through-hole to permit venting and thus reduction of said overpressure to safe levels. Said displacement of the halves of the cap provide also visual and tactile indication of the occurrence of overpressure. The caps may also be provided with both halves united by only the top-most rib, making such caps particularly suited for a process of lyophilization.

In an embodiment, the locking flaps taper out from their base towards their tip. This advantageously permits the reduction of the force necessary to apply and lock a cap onto a vial.

In an embodiment, the first half and the second half are made of a thermoplastic material. These material are be picked from a list of thermoplastics comprising: Polypropylene (PP), Polyvinyl chloride (PVC), Polystyrene (PS), Polyethylene terephthalate (PET), Polycarbonate (PC), Acrylonitrile Butadiene Styrene (ABS), Polyamide (PA or Nylon), Poly(methyl methacrylate) (PMMA or Acrylic), Polyoxymethylene (POM or Acetal), Polytetrafluoroethylene (PTFE or Teflon), Polyethylene oxide (PEO), Polyvinylidene fluoride (PVDF), Polybutylene (PB), or Ethylene Vinyl Acetate (EVA). Most preferably PP(polypropylene) or HDPE(High Density Polyethylene). The molding process is injection molding, sintering, compression molding, melt molding, transfer molding, spin molding or overmolding.

A second aspect of the application relates to an assembly comprising:
a vial for storing a medicinal fluid, the vial comprising an opening surrounded by a substantially cylindrical neck, which neck comprises a radially extending collar around the opening of the vial;
a stopper for covering the open end of the vial; and
a cap for retaining the stopper on the opening of the vial, the cap comprising a first half comprising an open tubular body, a plurality of locking flaps for locking onto a radial collar of a vial, said flaps extending diagonally upwards from an inner wall of the tubular body towards the center axis of the first half; and
a second half defining a top wall and a partial side wall of the cap, said second half having a tubular body.

According to the invention, at least the outer perimeter of the bottom of the second half comprises a rebated portion forming a step and an adjacent thinned wall portion, the outer perimeter surface of said thinned wall portion being substantially parallel with the axis of the cap, said outer perimeter surface of said thinned wall portion forming a union with at least part of the inner perimeter surface of the first half.

In an embodiment, the combined internal volume of the second half of the cap and the internal volume of the first half of the cap between internal locking flaps and the top of said first half is suitable to receive the collar and at least part of the neck of the vial, and the stopper for covering the open end of the vial. In this way, an airtight seal is provided without requiring significant pressure to be applied to the cap top wall during assembly.

In an embodiment, the internal volume inside the first half of the cap defined from a base of the locking flaps until the bottom edge of the of the side wall of said first half is suitable to receive the collar and at least part of the neck of the vial, and the stopper for covering the open end of the vial. This permits a good alignment of the cap with the stopper and the mouth of the vial as soon as any of said elements is inserted into the cap. This advantageously prevents damage to the cap, vial and/or stopper during assembly while advantageously permitting the evacuation of vapors during a process of lyophilization.

However, it is obvious that the invention is not limited to this application. The method according to the invention can be applied in all sorts of caps for covering stopers. For example, the present cap can be used to cover a stopper of a liquor bottle or other beverages.

The invention is further described by the following non-limiting examples which further illustrate the invention, and are not intended to, nor should they be interpreted to, limit the scope of the invention.

The present invention will be now described in more details, referring to examples that are not limitative.

### DESCRIPTION OF FIGURES

With as a goal illustrating better the properties of the invention the following presents, as an example and limiting in no way other potential applications, a description of a number of preferred of the vial cap based on the invention, wherein:

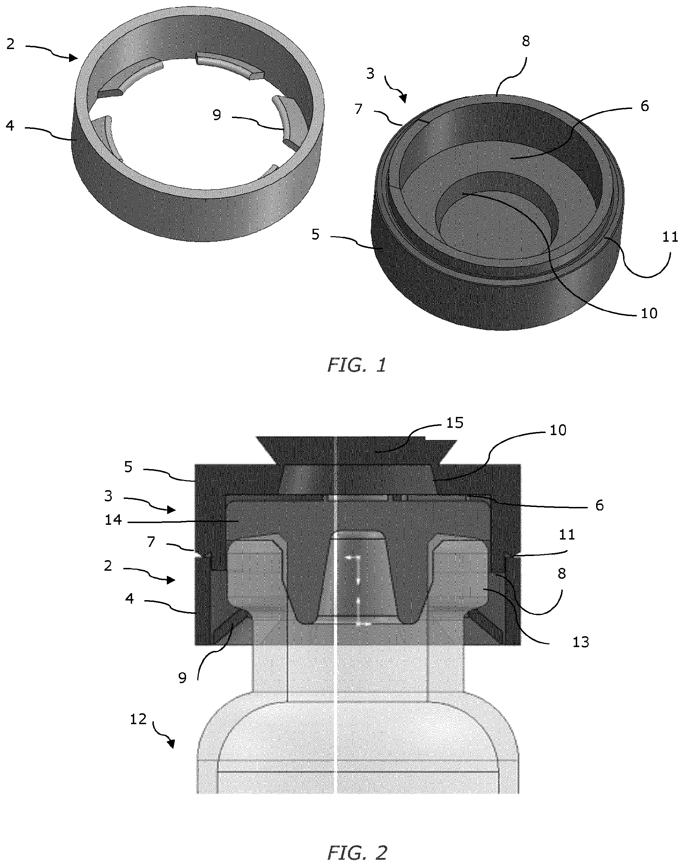

FIG. 1 schematically presents both halves of the cap (1). The figure shows a first half (2) comprising an open tubular body with a side-wall (4), a plurality of locking flaps (9) for locking onto a radial collar (13) of a vial (12). Said flaps (9) extend diagonally upwards from an inner wall of the tubular body of the first half (2) towards its center axis. The figure further shows a second half (3) defining a top wall (6) and a partial side wall (5) of the cap (1). The second half (3) also has a tubular body. The figure further shows a rebated portion (7) forming a step on the outer perimeter of the bottom of the second half (3) and an adjacent thinned wall portion (8), the outer perimeter surface of said thinned wall portion (8) being substantially parallel with the axis of the cap (1). Said outer perimeter surface of said thinned wall portion (8) forming a union with at least part of the inner perimeter surface of the first half (2) as shown in Fig. 2. A frangible line (10) is provided on the top wall (6) of the second half (3). An annular protrusion (11) is shown provided on the rebated portion/step (7) of the second half (3).
FIG. 2 presents a cross cut of the cap (1) in its final form and while assembled onto a vial (2). The figure shows the cap (1) in its final form, said cap (1) being placed on top of a stopper (14), which stopper (14) has a cylindrical portion extending into the opening of a vial (12). A top portion of said stopper (14) is shown between the top surface of a radially extending collar (13) surrounding the mouth of the vial (12) and the top wall (6) of the cap (1). The figure shows a lid (15) raised above the frangible line (10) so as to more easily allow the user to break said frangible line (10) and access to the contents of the vial (13).

### List of numbered items:

- 1: cap
- 2: first half
- 3: second half
- 4: wall of first half
- 5: wall of second half
- 6: top wall
- 7: rebated portion/step
- 8: thinned wall portion
- 9: locking flaps
- 10: frangible line
- 11: annular protrusion
- 12: vial
- 13: radially extending collar
- 14: stopper
- 15: lid

It is supposed that the present invention is not restricted to any form of realization described previously and that some modifications can be added to the presented example of fabrication within the scope of the appended claims. For example, the present invention has been described referring to vials, but it is clear that the invention can be applied to other vessels configured to hold fluids and, or granular material for instance or to be used as tamper evidence elements on inlets and/or outlets of a reservoir.

## Claims

1. A cap (1) for a vial (2):
a first half comprising an open tubular body, a plurality of locking flaps for locking onto a radial collar of a vial, said flaps extending diagonally upwards from an inner wall of the tubular body towards the center axis of the first half; and
a second half defining a top wall and a partial side wall of the cap, said second half having a tubular body;
**characterized in that**, at least the outer perimeter of the bottom of the second half comprises a rebated portion forming a step and an adjacent thinned wall portion, the outer perimeter surface of said thinned wall portion being substantially parallel with the axis of the cap, said outer perimeter surface of said thinned wall portion forming a union with at least part of the inner perimeter surface of the first half.

2. The cap according to claim 1, **characterized in that**, the step of the second half further comprises an annular protrusion between the thinned wall portion and the outer perimeter of said step, said protrusion having a triangular section.

3. The cap according to any claim of the previous claims, **characterized in that**, the union between both halves further comprises at least one layer of glue.

4. The cap according to any of the previous claims, **characterized in that**, the union between both halves further comprises at least one fused layer of a plastic material.

5. The cap according to any of the previous claims, **characterized in that**, the top wall of the second half comprises a frangible line defining at least a partial perimeter around a portion of said top wall, which portion of the top wall is configured as a lid.

6. The cap according to previous claim 5, **characterized in that**, said frangible line defines a circle.

7. The cap according to any of the previous claims, **characterized in that**, the second half further comprises a venting mechanism to allow the release of pressure within the vial.

8. The cap according to any of the previous claims, **characterized in that**, the thinned side wall portion of at least one of the halves includes at least one radially extending rib.

9. The cap according to any of the previous claims, **characterized in that**, the locking flaps taper out from their base towards their tip.

10. The cap according to any of the previous claims, **characterized in that**, the first half and the second half are made of a thermoplastic material.

11. An assembly comprising:
a vial for storing a medicinal fluid, the vial comprising an opening surrounded by a substantially cylindrical neck, which neck comprises a radially extending collar around the opening of the vial;
a stopper for covering the open end of the vial; and
a cap according to claim 1.

12. The assembly according to claim 11, **characterized in that**, the combined internal volume of the second half of the cap and the internal volume of the first half of the cap between internal locking flaps and the top of said first half is suitable to receive the collar and at least part of the neck of the vial, and the stopper for covering the open end of the vial.

13. The assembly according to any of the previous claims 11-12, **characterized in that**, the internal volume inside the first half of the cap defined from a base of the locking flaps until the bottom edge of the of the side wall of said first half is suitable to receive the collar and at least part of the neck of the vial, and the stopper for covering the open end of the vial.

## Patentansprüche

1. Kappe (1) für ein Fläschchen (2):
wobei eine erste Hälfte einen offenen röhrenförmigen Hauptteil, mehrere Verriegelungsklappen zum Verriegeln an einem radialen Bund eines Fläschchens umfasst, wobei sich die Klappen diagonal aufwärts von einer Innenwand des röhrenförmigen Hauptteils hin zu der Mittelachse der ersten Hälfte erstrecken, und
wobei eine zweite Hälfte eine obere Wand und eine Teilseitenwand der Kappe bildet, wobei die zweite Hälfte einen röhrenförmigen Hauptteil aufweist,
**dadurch gekennzeichnet, dass** der Außenumfang des Bodens der zweiten Hälfte einen zurückgesetzten Abschnitt, der eine Stufe bildet, und einen angrenzenden dünneren Wandabschnitt umfasst, wobei der Außenumfang des dünneren Wandabschnitts im Wesentlichen parallel zu der Achse der Kappe liegt, wobei die Außenumfangsfläche des dünneren Wandabschnitts eine Verbindung mit mindestens einem Teil der Innenumfangsfläche der ersten Hälfte bildet.

2. Kappe nach Anspruch 1, **dadurch gekennzeichnet, dass** die Stufe der zweiten Hälfte ferner einen ringförmigen Vorsprung zwischen dem dünneren Wandabschnitt und dem Außenumfang der Stufe umfasst, wobei der Vorsprung einen dreieckigen Querschnitt aufweist.

3. Kappe nach einem Anspruch der vorhergehenden Ansprüche, **dadurch gekennzeichnet, dass** die Verbindung zwischen beiden Hälften ferner mindestens eine Schicht Leim umfasst.

4. Kappe nach einem der vorhergehenden Ansprüche, **dadurch gekennzeichnet, dass** die Verbindung zwischen beiden Hälften ferner mindestens eine verschmolzene Schicht aus einem Kunststoffmaterial umfasst.

5. Kappe nach einem der vorhergehenden Ansprüche, **dadurch gekennzeichnet, dass** die obere Wand der zweiten Hälfte eine zerbrechliche Linie umfasst, die mindestens einen Teilumfang um einen Abschnitt der oberen Wand bildet, wobei dieser Abschnitt der oberen Wand als Deckel ausgestaltet ist.

6. Kappe nach dem vorhergehenden Anspruch 5, **dadurch gekennzeichnet, dass** die zerbrechliche Linie einen Kreis definiert.

7. Kappe nach einem der vorhergehenden Ansprüche, **dadurch gekennzeichnet, dass** die zweite Hälfte ferner einen Entlüftungsmechanismus umfasst, um das Ablassen von Druck in dem Fläschchen zu gestatten.

8. Kappe nach einem der vorhergehenden Ansprüche, **dadurch gekennzeichnet, dass** der dünnere Seitenwandabschnitt von mindestens einer der Hälften mindestens eine sich radial erstreckende Rippe beinhaltet.

9. Kappe nach einem der vorhergehenden Ansprüche, **dadurch gekennzeichnet, dass** sich die Verriegelungsklappen von ihrer Basis zu ihrer Spitze verjüngen.

10. Kappe nach einem Anspruch der vorhergehenden Ansprüche, **dadurch gekennzeichnet, dass** die erste Hälfte und die zweite Hälfte aus einem Thermoplastmaterial bestehen.

11. Anordnung, umfassend:
eine Fläschchen zum Aufbewahren eines medizinischen Fluids, wobei das Fläschchen eine Öffnung umfasst, die von einem im Wesentlichen zylindrischen Hals umgeben ist, wobei der Hals einen sich radial erstreckenden Bund um die Öffnung des Fläschchens umfasst,
einen Stopfen zum Bedecken des offenen Endes des Fläschchens, und
eine Kappe nach Anspruch 1.

12. Anordnung nach Anspruch 11, **dadurch gekennzeichnet, dass** das Innenvolumen der zweiten Hälfte der Kappe kombiniert mit dem Innenvolumen der ersten Hälfte der Kappe zwischen inneren Verriegelungsklappen und der Oberseite der ersten Hälfte geeignet ist, um den Bund und mindestens einen Teil des Halses des Fläschchens sowie den Stopfen zum Bedecken des offenen Endes des Fläschchens aufzunehmen.

13. Anordnung nach einem der vorhergehenden Ansprüche 11-12, **dadurch gekennzeichnet, dass** das Innenvolumen im Inneren der ersten Hälfte der Kappe, das von einer Basis der Verriegelungsklappen bis zum unteren Rand der Seitenwand der ersten Hälfte definiert ist, geeignet ist, um den Bund und mindestens einen Teil des Halses des Fläschchens sowie den Stopfen zum Bedecken des offenen Endes des Fläschchens aufzunehmen.

## Revendications

1. Capuchon (1) pour un flacon (2) :
une première moitié comprenant un corps tubulaire ouvert, une pluralité de pattes de verrouillage destinées à se fixer sur un collier radial d'un flacon, lesdites pattes s'étendant en diagonale vers le haut à partir d'une paroi intérieure du corps tubulaire vers l'axe central de la première moitié ; et
une seconde moitié définissant une paroi supérieure et une paroi latérale partielle du capuchon, ladite seconde moitié présentant un corps tubulaire ;
**caractérisé en ce que**, au moins le périmètre extérieur du fond de la seconde moitié comprend une portion en retrait formant un gradin et une portion de paroi amincie adjacente, la surface de périmètre extérieur de ladite portion de paroi amincie étant sensiblement parallèle à l'axe du capuchon, ladite surface de périmètre extérieur de ladite portion de paroi amincie formant une union avec au moins une partie de la surface de périmètre intérieur de la première moitié.

2. Capuchon selon la revendication 1, **caractérisé en ce que** le gradin de la seconde moitié comprend en outre une saillie annulaire entre la partie de paroi amincie et le périmètre extérieur dudit gradin, ladite saillie présentant une section triangulaire.

3. Capuchon selon l'une quelconque des revendications précédentes, **caractérisé en ce que** l'union entre les deux moitiés comprend en outre au moins une couche de colle.

4. Capuchon selon l'une quelconque des revendications précédentes, **caractérisé en ce que** l'union entre les deux moitiés comprend en outre au moins une couche fusionnée de matière plastique.

5. Capuchon selon l'une quelconque des revendications précédentes, **caractérisé en ce que** la paroi supérieure de la seconde moitié comprend une ligne fragile définissant au moins un périmètre partiel autour d'une portion de ladite paroi supérieure, laquelle portion de la paroi supérieure est configurée comme un couvercle.

6. Le capuchon selon la revendication précédente 5, **caractérisé en ce que** ladite ligne fragile définit un cercle.

7. Capuchon selon l'une quelconque des revendications précédentes, **caractérisé en ce que** sa seconde moitié comprend en outre un mécanisme de ventilation permettant la libération de la pression à l'intérieur du flacon.

8. Capuchon selon l'une quelconque des revendications précédentes, **caractérisé en ce que** la partie de paroi latérale amincie d'au moins une des moitiés inclut au moins une nervure s'étendant radialement.

9. Capuchon selon l'une quelconque des revendications précédentes, **caractérisé en ce que** les pattes de verrouillage s'évasent de leur base vers leur pointe.

10. Capuchon selon l'une quelconque des revendications précédentes, **caractérisé en ce que** la première moitié et la seconde moitié sont constituées d'un matériau thermoplastique.

11. Ensemble, comprenant :
un flacon destiné à stocker un liquide médicinal, le flacon comprenant une ouverture entourée d'un col sensiblement cylindrique, lequel col comprend un collier s'étendant radialement autour de l'ouverture du flacon ;
un bouchon pour fermer l'extrémité ouverte du flacon ; et
un capuchon selon la revendication 1.

12. Ensemble selon la revendication 11, **caractérisé en ce que** le volume interne combiné de la seconde moitié du capuchon et le volume interne de la première moitié du capuchon entre des pattes de verrouillage internes et le haut de ladite première moitié est adapté pour recevoir le collier et au moins une partie du col du flacon, ainsi que le bouchon pour couvrir l'extrémité ouverte du flacon.

13. Ensemble selon l'une quelconque des revendications précédentes 11-12, **caractérisé en ce que** le volume interne à l'intérieur de la première moitié du capuchon, défini depuis la base des pattes de verrouillage jusqu'au bord inférieur de la paroi latérale de ladite première moitié, est adapté pour recevoir le collier et au moins une partie du col du flacon, ainsi que le bouchon destiné à couvrir l'extrémité ouverte du flacon.
